# EUROPEAN PATENT APPLICATION

(11) **EP 2 045 764 A1**
(43) Date of publication of application: **08.04.2009**
(21) Application number: 08161923.1
(22) Date of filing: 06.08.2008
(51) Int. Cl.: G06K 19/077

(54) **RFID tag**

(30) Priority: 05.10.2007 JP 2007262152
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Baba, Shunji, Kanagawa 211-8588 (JP); Hashimoto, Shigeru, Tokyo 206-8555 (JP); Sugimura, Yoshiyasu, Tokyo 206-8555 (JP); Niwata, Tsuyoshi, Tokyo 206-8555 (JP); Nogami, Satoru, Tokyo 206-8555 (JP)
(74) Representative: Kreutzer, Ulrich

(57) **Abstract**

An RFID tag (100) includes: a tag member (111) in which a communication antenna (111b) is wired on a predetermined base and a circuit chip (111c) which carries out radio communication through the antenna is electrically connected to the antenna, a covering body (112) which covers the tag member and encloses the tag member therein, a reflection plate (120) which reflects radio communication radio wave and which extends along the base, and a spacer (130) sandwiched between the covering body and the reflection plate.

## Description

### BACKGROUND OF THE INVENTION

### 1. Field of the Invention

The present invention relates to an RFID (Radio Frequency IDentification) tag through which information is exchanged with external equipment in a non-contact manner. The "RFID tag" used in the specification of the present application is called "radio IC tag" by persons skilled in the technical field of the application in some cases.

### 2. Description of the Related Art

As the RFID tag through which information is exchanged with external equipment such as a reader/writer through radio wave in a non-contact manner, there is a known RFID tag in which a radio communication antenna and a circuit chip are mounted on a base formed of plastic or paper. Since many of the RFID tags obtain operating power supply of a circuit chip from a reader/writer by radio wave, a distance (communication distance) through which radio communication can be carried out is as short as from several cm to several tens cm. In this case, if material which includes moisture and easily absorbs radio wave, a metal which reflects radio wave, or the like exists near the RFID tag, radio wave from the reader/writer does not easily reach the antenna. Accordingly, the short communication distance further becomes shorter and as a result, it may become difficult to exchange information. Hence, there is a growing desire to increase the communication distance in such RFID tag.

In response to such desire, there is proposed a technique in which an RFID tag is provided with a reflection member which reflects radio communication radio wave and which extends along the base, radio wave received by an antenna is intensified by a reflection effect of the reflection member, thereby increasing the communication distance (see Japanese Patent Application Publication Nos. 2002-298106, 2005-135354 and 2006-264760, for example).

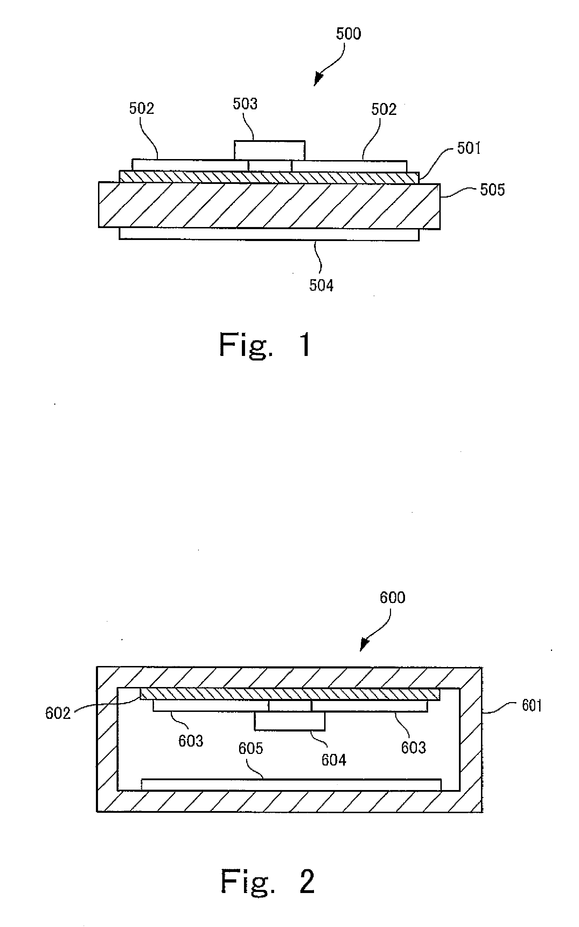

Fig. 1 is a diagram showing one example of an RFID tag having a reflection member, and Fig. 2 is a diagram showing another example of an RFID tag having a reflection member.

The RFID tag 500 shown in Fig. 1 includes a base 501, a radio communication antenna 502 wired on the base 501, a circuit chip 503 which is electrically connected to the antenna 502 and which carries out radio communication through the antenna 502, a metal reflection plate 504 which reflects radio communication radio wave extending along the base 501, and a spacer 505 sandwiched between the base 501 and the reflection plate 504.

The RFID tag 600 shown in Fig. 2 includes a hollow case 601, a base 602 which is pasted on one of two mutually opposed inner wall faces in the case 601, a radio communication antenna 603 wired on the base 602, a circuit chip 604 which is electrically connected to the antenna 603 and which carries out radio communication through the antenna 603, and a metal reflection plate 605 which is pasted on the other inner wall face opposite to the face on which the base 602 is pasted and which reflects radio communication radio wave.

According to the RFID tag 500 shown in Fig. 1 and the RFID tag 600 shown in Fig. 2, the radio communication radio wave is reflected by the reflection plate 504, 605. As a result, a composite wave in which a traveling wave traveling to the reflection plate 504, 605 and a reflected wave reflected by the reflection plate 504, 605 are synthesized is received by the antenna 502, 603. At this time, if a relative positional relation between the reflection plate 504, 605 and the antenna 502, 603 is brought to a positional relation in which the traveling wave and the reflected wave intensify each other at the position of the antenna 502, 603, the radio wave received by the antenna 502, 603 is intensified, and the communication distance of the RFID tag 500, 600 is increased.

In the conventional RFID tags, sufficient environmental resistance capable of enduring various operating environments is required, and it is desired that the RFID tag is as small as possible.

However, according to the RFID tag 500 shown in Fig. 1 and the RFID tag 600 shown in Fig. 2, the communication distance is long but both sufficient environmental resistance and miniaturization have not been realized, and an RFID tag which has a long communication distance and also sufficient environmental resistance, and which can be miniaturized is desired.

In view of the above circumstances, it is an object of the present invention to provide an RFID tag which has a long communication distance and a sufficient environmental resistance, and which can be miniaturized.

### SUMMARY OF THE INVENTION

The present invention has been made in view of the above circumstances and provides an RFID tag including a tag member in which a communication antenna is wired on a predetermined base and a circuit chip which carries out radio communication through the antenna is electrically connected to the antenna, a covering body which covers the tag member and encloses the tag member therein, a reflection member which reflects radio communication radio wave and which extends along the base, and a spacer sandwiched between the covering body and the reflection member.

According to the RFID tag of the present invention, since radio wave received by the antenna is intensified by a reflection effect by the reflection member, the communication distance is long. Further, according to the RFID tag of the present invention, since the tag member is enclosed in the covering body, the circuit chip and the antenna which are sensitive to operating environment are sufficiently protected against the operating environment. In the RFID tag of the present invention, since the antenna mainly receives a composite wave in which a traveling wave traveling to the reflection member and a reflected wave reflected by the reflection member are synthesized, the size of the antenna can be designed so as to correspond to a wavelength of the composite wave. The wavelength of the composite wave is shorter as a specific inductive capacity between the antenna and the reflection member is greater. In the RFID tag of the present invention, since the spacer mainly occupies a space between the antenna and the reflection member, if a dielectric constant material having a high specific inductive capacity is employed as the spacer, for example, the antenna can be reduced in size in a design stage. Thus, according to the present invention, it is possible to provide an RFID tag having a long communication distance and sufficient environmental resistance, and which can be miniaturized.

In the RFID tag of the present invention, an embodiment in which "the covering body has the water-tightness" is preferable.

According to this embodiment, it is possible to more reliably protect the circuit chip and the antenna which are sensitive to an operating environment.

In the RFID tag of the present invention, an embodiment in which "the covering body is made of rubber or plastic" is also preferable.

Many of rubbers and plastics have excellent heat resistance and chemical resistance. According to this preferable embodiment, if the covering body is made of appropriate rubber or plastic suitable for operating environment, the covering body can be provided with heat resistance or chemical resistance and as a result, the RFID tag can be provided with excellent environmental resistance.

In the RFID tag of the present invention, an embodiment in which "the spacer is adhered to the covering body and the reflection member" is preferable. In this embodiment, it is further preferable that "the spacer is adhered to at least one of the covering body and the reflection member such that the spacer can come off therefrom".

In the above preferable embodiment, it is easy to manufacture the RFID tag, and in the further preferable embodiment, it is possible to remove the spacer and the reflection plate from the RFID tag after it is manufacture d, and they are replaced by another spacer and another reflection plate. Accordingly, the RFID tag after it is manufactured can appropriately be customized in accordance with an operating environment.

In the RFID tag of the present invention, an embodiment in which "the spacer is made of PPS resin", an embodiment in which "the spacer is made of PEEK resin", an embodiment in which "the spacer is made of fluororesin", and an embodiment in which "the spacer is made of ceramic material" are preferable.

The PPS (Polyphenylene Sulfide) resin is excellent in heat resistance, the PEEK (Polyetherethereketone) resin is excellent in heat resistance and chemical resistance, the fluororesin is excellent in chemical resistance, and the ceramic material has high specific inductive capacity. According to the preferable embodiments, it is possible to obtain an RFID tag having an excellent heat resistance, an RFID tag having an excellent chemical resistance, a sufficiently miniaturized RFID tag and the like.

In the RFID tag of the present invention, an embodiment in which "the reflection member has a heat resistance" is preferable, and an embodiment in which "the spacer is adhered to each of the covering body and the reflection member with heat-resistant adhesive member" is preferable.

According to these embodiments, it is possible to obtain an RFID tag having a more excellent heat resistance.

As explained above, according to the present invention, it is possible to provide an RFID tag which has a long communication distance and a sufficient environmental resistance, and which can be miniaturized.

### BRIEF DESCRIPTION OF THE DRAWINGS

Fig. 1 is a diagram showing one example of an RFID tag having a reflection member;
Fig. 2 is a diagram showing another example of an RFID tag having a reflection member;
Fig. 3 is a sectional view schematically showing a heat-resistant RFID tag according to a first embodiment of the present invention;
Fig. 4 is a diagram showing a state where a spacer 130 is adhered to a covering body 112 of the tag body 110 and a reflection plate 120 in manufacturing the RFID tag 100 shown in Fig. 3;
Fig. 5 is a diagram showing a state where the spacer 130 is replaced by another spacer in the RFID tag 100 shown in Fig. 3;
Fig. 6 is a sectional view schematically showing a heat-resistant RFID according to a second embodiment of the present invention tag different from the RFID tag shown in Fig. 3;
Fig. 7 is a sectional view schematically showing a chemical-resistant RFID tag according to a third embodiment of the present invention; and
Fig. 8 is a sectional view schematically showing a small RFID tag according to a fourth embodiment of the present invention.

### DETAILED DESCRIPTION OF THE INVENTION

First to fourth embodiments of the present invention will be explained with reference to the drawings.

First, a first embodiment of the present invention will be explained.

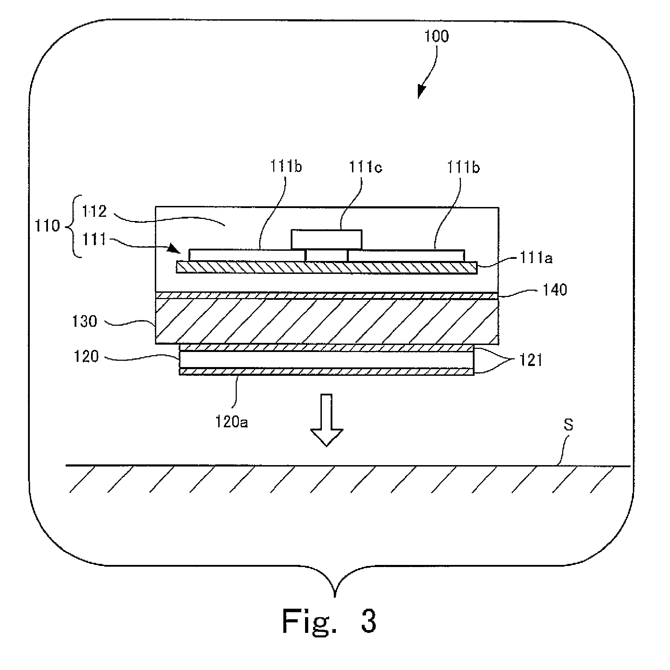

Fig. 3 is a sectional view schematically showing a heat-resistant RFID tag according to the first embodiment of the present invention.

The heat-resistant RFID tag 100 shown in Fig. 3 is fixed to an article S to which the RFID tag is to be attached, and information is exchanged with a reader/writer through radio communication. It is assumed that the RFID tag 100 is used in a predetermined high temperature environment. The RFID tag 100 includes a tag body 110 having a radio communication function. The tag body 110 has a predetermined base 111a on which a communication antenna 111b is wired. The tag body 110 includes a tag member 111 to which a circuit chip 111c is connected, and a rubber covering body 112 which covers the tag member 111 and encloses the same therein. The circuit chip 111c carries out radio communication through the antenna 111b. The base 111a, the antenna 111b and the circuit chip 111c respectively correspond to each of the examples of the base, the antenna and the circuit chip in the present invention, and the tag member 111 and the covering body 112 respectively correspond to each of the examples of the tag member and the covering body in the present invention.

The RFID tag 100 includes a metal reflection plate 120 coated with heat-resistant material. The reflection plate 120 extends along the base 111a and reflects radio communication radio wave. The RFID tag 100 also includes a PPS resin spacer 130 sandwiched between the reflection plate 120 and the covering body 112 of the tag body 110. The reflection plate 120 and the spacer 130 respectively correspond to each of the examples of the reflection member and the spacer mentioned in the present invention.

In the RFID tag 100, the spacer 130 is adhered to the covering body 112 of the tag body 110 and the reflection plate 120 in the following manner.

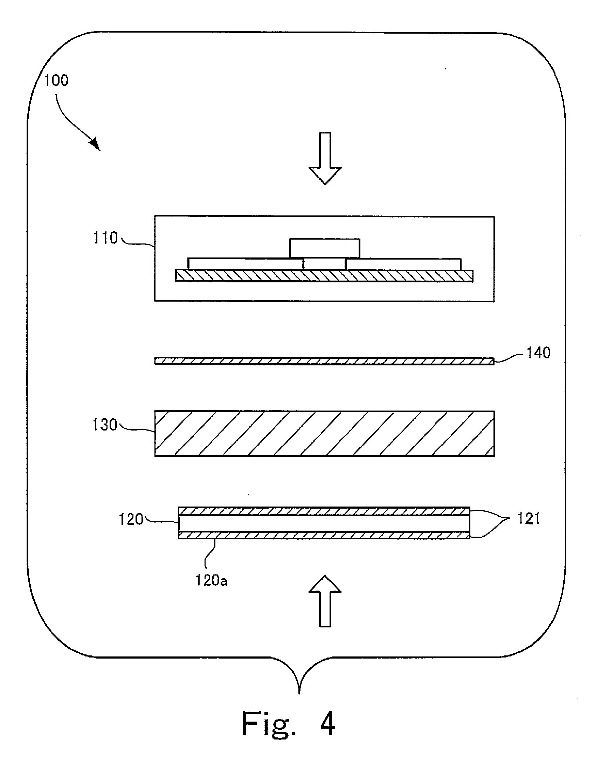

Fig. 4 is a diagram showing a state where the spacer 130 is adhered to the covering body 112 of the tag body 110 and the reflection plate 120 in manufacturing the RFID tag 100 shown in Fig. 3.

As shown in Fig. 4, the spacer 130 is adhered to the covering body 112 in the tag body 110 using a heat-resistant adhesive tape 140 which is also shown in Fig. 3. Heat-resistant adhesive 121 which is the same adhesive material of the heat-resistant adhesive tape 140 is applied to both surfaces of the reflection plate 120, and the reflection plate 120 to which the heat-resistant adhesive 121 is applied is pasted on the spacer 130. At this time, a back surface 120a of the reflection plate 120 to which the heat-resistant adhesive 121 is applied and which is opposite to the surface on the side of the tag body 110 becomes an attaching surface which comes into contact with the article S to which the tag is to be attached when the RFID tag 100 is used. In this embodiment, the adhesive strength of the heat-resistant adhesive tape 140 and heat-resistant adhesive 121 is set such that the adhered objects are not peeled off from each other under an assumed operating environment, but the adhered objects can be peeled off from each other if a user applies a force to some extent.

According to the RFID tag 100, the radio communication radio wave is reflected by the reflection plate 120. As a result, a composite wave in which a traveling wave traveling to the reflection plate 120 and a reflected wave reflected by the reflection plate 120 are synthesized is received by the antenna 111b. In addition, in this RFID tag 100, the thickness of the spacer 130 is designed such that a relative positional relation between the reflection plate 120 and the antenna 111b becomes a positional relation in which the traveling wave and the reflected wave intensify each other at the position of the antenna 111b. Accordingly, since the radio wave received by the antenna 111b is intensified, the communication distance of the RFID tag 100 is increased.

In addition, in the RFID tag 100, the tag member 111 is enclosed in the covering body 112. As material of the covering body 112, there is employed rubber having excellent resistance to wide range of as operating environment such as heat, moisture and chemical agent (the material is not specified here, but examples of such material are urethane rubber, silicone rubber and Teflon (trademark) rubber). Accordingly, environmentally sensitive circuit chip 111c and the like are protected from wide range of operating environment with excellent water-tightness.

In the RFID tag 100, the spacer 130 is made of PPS resin having excellent heat resistance. The heat-resistant adhesive tape 140 is used for adhering the spacer 130 to the tag member 111. The heat-resistant adhesive 121 is used for adhering the spacer 130 and the reflection plate 120 with a heat-resistant coating, and for adhering the reflection plate 120 and the article S to which a tag is to be attached. Accordingly, excellent heat resistance is obtained in the RFID tag 100.

In addition, in the RFID tag 100, the antenna 111b receives a composite wave in which a traveling wave traveling to the reflection plate 120 and a reflected wave reflected by the reflection plate 120 are synthesized, the size of the antenna 111b is designed to correspond to the wavelength of the composite wave. Here, wavelength of the composite wave is shorter as a specific inductive capacity of the spacer 130 which mainly occupies a space between the antenna 111b and the reflection plate 120 is greater. Therefore, the size of the antenna 111b is set to a value corresponding to the specific inductive capacity of PPS resin which is the material of the spacer 130. Here, the specific inductive capacity of the PPS resin is greater than "1.0" which is the specific inductive capacity of air, and the size of the antenna 111b is smaller than a size required for using the same type of antenna in the air. As a result, in this embodiment, the RFID tag 100 is designed to be miniaturized in a size to meet the specific inductive capacity of the PPS resin.

Here, the RFID tag 100 is designed such that the antenna 111b receives the composite wave in which the traveling wave traveling to the reflection plate 120 and the reflected wave reflected by the reflection plate 120 are synthesized at a position where the traveling wave and the reflected wave intensify each other. Depending upon an radio wave environment when the RFID tag 100 is used, however, the position of the antenna 111b with respect to the reflection plate 120 may be largely deviated from the position where the traveling wave and reflected wave intensify each other which was assumed at the time of design, and sufficient receiving strength may not be obtained with the antenna 111b in some cases.

The position of the antenna 111b with respect to the reflection plate 120 is determined by the thickness of the spacer 130. In this embodiment, the adhesive strength of the heat-resistant adhesive tape 140 which adheres the spacer 130 and the covering body 112 of the tag body 110, and the adhering strength of the heat-resistant adhesive 121 which adheres the spacer 130 and the reflection plate 120 are set such that they can be peeled off if a user applies a force to some extent. Thus, in this embodiment, when the antenna 111b may not obtain sufficient receiving strength, the tag body 110 and the reflection plate 120 are peeled off from the spacer 130, and the spacer 130 can be replaced by another spacer having such a thickness that the antenna 111b can obtain sufficient receiving strength.

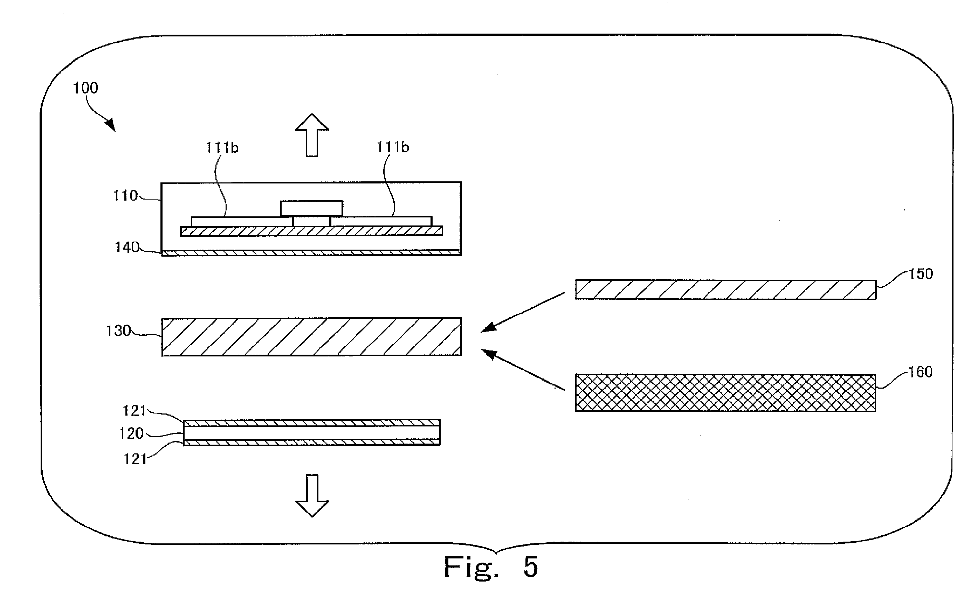

Fig. 5 shows a state where the spacer 130 is replaced by another spacer in the RFID tag 100 shown in Fig. 3.

As shown in Fig. 5, when the spacer is replaced by a new one, the tag body 110 and the reflection plate 120 are first peeled off from the spacer 130. Then, another spacer 150 with an appropriate thickness which is redesigned in accordance with a radio wave environment where the RFID tag 100 is used is adhered to the tag body 110 and the reflection plate 120 in place of the spacer 130. In addition, if the heat-resistant adhesive tape 140 is damaged when the tag body 110 is peeled off from the spacer 130, the heat-resistant adhesive tape 140 is also replaced by a new one when the new spacer 150 is adhered. Further, if the heat-resistant adhesive 121 comes off from the reflection plate 120 at the time of peeling, the heat-resistant adhesive 121 is again applied to the reflection plate 120 when the spacer 150 is adhered.

As a method for enhancing the receiving strength when the antenna 111b may not obtain sufficient receiving strength, there is a method in which the spacer 130 is replaced by another spacer 160 having different specific inductive capacity, in addition to the method in which the spacer 130 is replaced by another spacer 150 having a different thickness to change the position of the antenna 111b with respect to the reflection plate 120.

As described above, the wavelength of composite wave received by the antenna 111b is shorter as the specific inductive capacity of the spacer is greater. Therefore, if the spacer 130 is replaced by another spacer 160 having different specific inductive capacity to change the wavelength of the composite wave, it is possible to move a position where the traveling wave and the reflected wave intensify each other. According to this method, when it is difficult to replace the spacer 130 by the other spacer 150 having different thickness due to constraints such as an attaching place of the RAID tag 100, the other spacer 160 with the same thickness as that of the RFID tag 300 which is redesigned in accordance with the radio wave environment where the RFID tag 100 is used, and which is made of another material having a specific inductive capacity different from that of the PPS resin is adhered to the tag body 110 and the reflection plate 120 in place of the spacer 130. Accordingly, the receiving strength of the antenna 111b can be enhanced.

In addition, when another spacer replacing the spacer 130 is designed, redesign of the thickness and redesign of the specific inductive capacity may be combined to change both the position of the antenna 111b with respect to the reflection plate 120 and the wavelength of the composite wave received by the antenna 111b, thereby enhancing the receiving strength of the antenna 111b.

As explained above, the heat-resistant RFID tag 100 of the first embodiment has sufficient heat resistance, is small in size, and has a long communication distance. In addition, according to the RFID tag 100, the spacer 130 can be replaced by another spacer as desired when the RFID tag 100 is used, and even when the antenna 111b cannot obtain sufficient receiving strength due to a radio wave environment when the tag is used, the receiving strength of the antenna 111b can be enhanced by replacing the spacer.

Next, a second embodiment of the present invention will be explained.

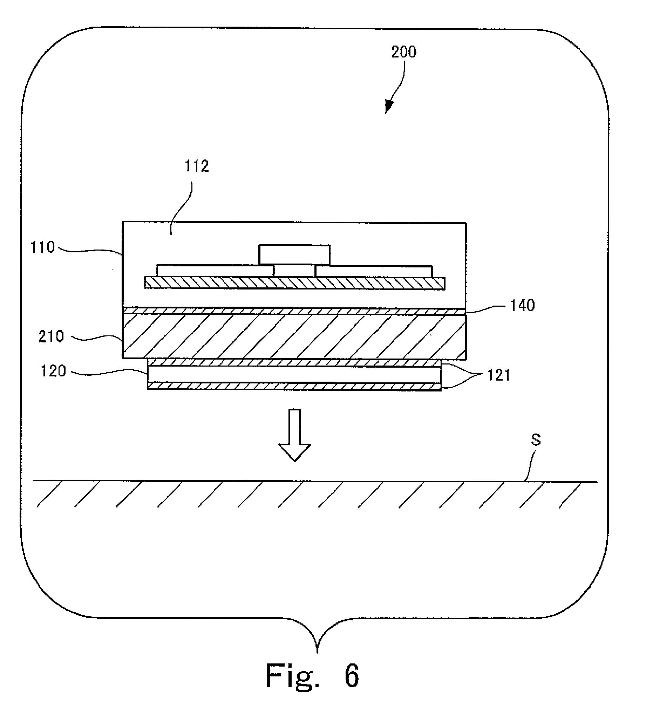

Fig. 6 is a sectional view schematically showing a heat-resistant RFID tag according to the second embodiment of the present invention that is different from the RFID tag shown in Fig. 3. In Fig. 6, constituent elements which are the same as those shown in Fig. 3 are designated with the same reference symbols as those in Fig. 3, and the explanation thereof will not be repeated.

The heat-resistant RFID tag 200 shown in Fig. 6 is different from the heat-resistant RFID tag 100 shown in Fig. 3 only in a spacer 210. The spacer 130 in Fig. 3 is made of PPS resin, but the spacer 210 of the heat-resistant RFID tag 200 shown in Fig. 6 is made of PEEK resin. The PEEK resin has excellent heat resistance and chemical resistance. The RFID tag 200 having the spacer 210 made of PEEK resin exhibits excellent heat resistance in combination with respective heat resistances of the covering body 112 of the tag member 111, the reflection plate 120 with a heat-resistant coating, the heat-resistant adhesive tape 140 and the heat-resistant adhesive 121.

Like the first embodiment, the heat-resistant RFID tag 200 of the second embodiment is small in size, and has a long communication distance, and the spacer 210 can be replaced by another spacer ad desired when the tag is used.

Next, a third embodiment of the present invention will be explained.

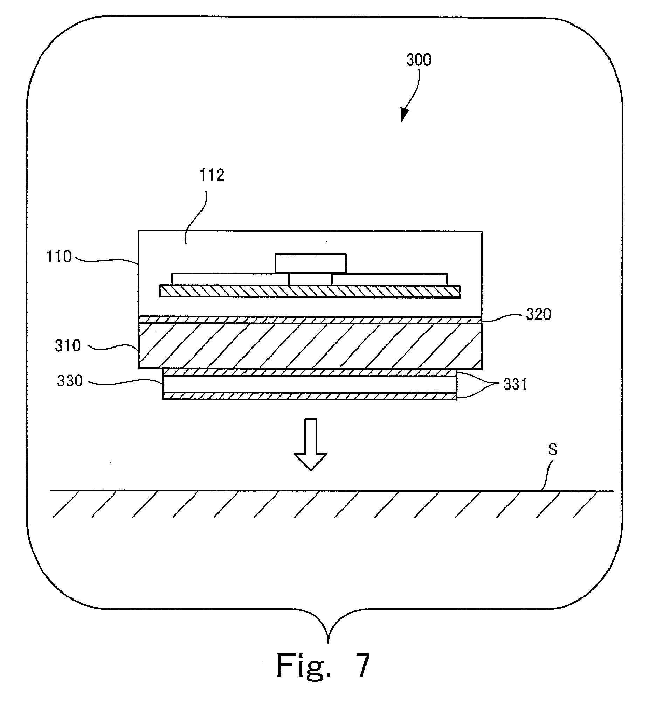

Fig. 7 is a sectional view schematically showing a chemical-resistant RFID tag according to the third embodiment of the present invention. In Fig. 7, constituent elements which are the same as those shown in Fig. 3 are designated with the same reference symbols as those in Fig. 3, and the explanation thereof will not be repeated.

The chemical-resistant RFID tag 300 shown in Fig. 7 is different from the heat-resistant RFID tag 100 shown in Fig. 3 in that a spacer 310 is made of fluororesin having excellent chemical resistance, a reflection plate 330 is a metal plate with a chemical-resistant coating, and a chemical resistance adhesive tape 320 and a chemical resistance adhesive 331 are used for adhering the spacer 310 and other parts. Since the covering body 112 of the tag member 111 is made of rubber having resistance to wide range of environment (for example, the silicone rubber has both heat resistance and chemical resistance) as described above, the RFID tag 300 shown in Fig. 7 has excellent chemical resistance in combination with respective chemical resistances of the covering body 112, the reflection plate 330 coated with chemical-resastant material, the chemical resistance adhesive tape 320 and the chemical resistance adhesive 331.

In addition, like the first and second embodiments, the chemical-resistant RFID tag 300 of the third embodiment is small in size, and has a long communication distance, and the spacer 310 can be replaced by another spacer as desired when the tag is used.

Next, a fourth embodiment of the present invention will be explained.

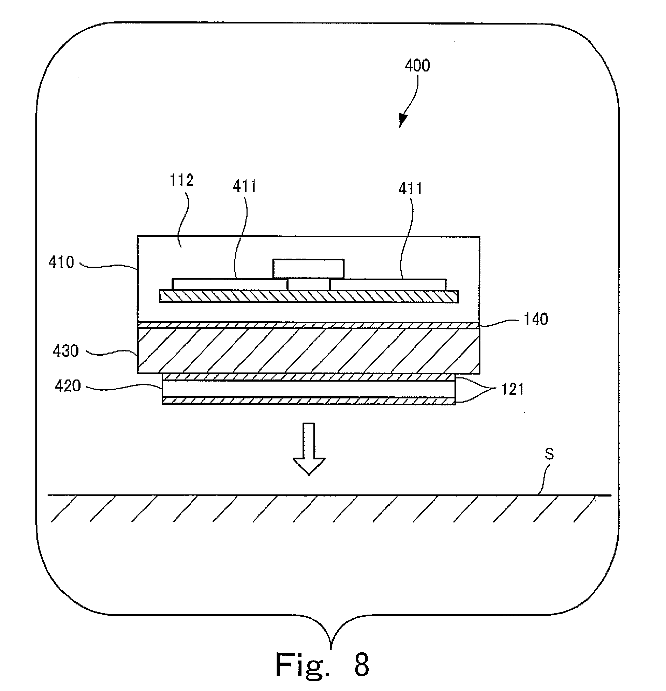

Fig. 8 is a sectional view schematically showing a small RFID tag according to the fourth embodiment of the present invention. In Fig. 8, constituent elements which are the same as those shown in Fig. 3 are designated with the same reference symbols as those in Fig. 3, and the explanation thereof will not be repeated.

Like the RFID tag 100 shown in Fig. 3, the small RFID tag 400 shown in Fig. 8 has heat resistance as the environmental resistance, but the RFID tag 400 in Fig. 8 is further reduced in size as compared with the RFID tag 100 in Fig. 3. The RFID tag 400 in Fig. 8 is further reduced in size by using a spacer 430 made of ceramic material having high dielectric constant (the material is not specified here, but an example thereof is alumina).

An antenna 411 of a tag member 410 has mainly a size corresponding to a wavelength of composite wave in the spacer 430. As the specific inductive capacity of the spacer 430 is greater, the wavelength of the composite wave is shorter. Therefore, as the specific inductive capacity of the spacer 430 is greater, the antenna 411 can be reduced in size. According to the RFID tag 400 in Fig. 8, the spacer 430 is made of ceramic material having high specific inductive capacity. Therefore, the antenna 411 is reduced in size in accordance with the great specific inductive capacity and as a result, the tag member 410 and a reflection plate 420 with a heat-resistant coating are reduced in size, and the entire RFID tag 400 is made small.

Further, since the ceramic material has an excellent heat resistance, heat resistance is also realized in the RFID tag 400. In the fourth embodiment, the heat-resistant adhesive tape 140 and the heat-resistant adhesive 121 shown in Fig. 3 are used for adhering the spacer 410 and other parts with each other, thereby realizing the small and heat-resistant RFID tag. Further, since the ceramic material also has an excellent chemical resistance, if the chemical resistance adhesive tape 320 and the chemical resistance adhesive 331 shown in Fig. 7 are used for adhering the spacer 410 and other parts, it is also possible to realize a small and chemical-resistant RFID tag different from the RFID tag of this fourth embodiment.

Like the first to third embodiments, the small RFID tag 400 of the fourth embodiment has a long communication distance, and the spacer 430 can be replaced by another spacer as desired when the tag is used.

In each of the first to fourth embodiments, to enhance the receiving strength of the antenna, it has been explained that the spacer of the RFID tag is replaced by another spacer having different thickness or specific inductive capacity when the RFID tag is used. However, the replacement of the spacer is not limited to enhancement of the receiving strength of the antenna, and the spacer may be replaced to change types of environmental resistance, i.e., the spacer may be replaced to change from a heat-resistant type to a chemical-resistant type or from the chemical-resistant type to the heat-resistant type. However, the spacer can be replaced by another spacer to change the types of the environmental resistance when the covering body of the tag body is made of material having wide and excellent environmental resistance (such as silicone rubber) such as rubber covering body in the first to fourth embodiments.

When it is aimed to change the type of the environmental resistance, a heat-resistant spacer (made of PPS resin) of a heat-resistant RFID tag, for example, is replaced by a chemical-resistant spacer (made of fluororesin) when the RFID tag is used, or conversely, a chemical-resistant spacer (made of fluororesin) of a chemical-resistant RFID tag is replaced by a heat-resistant spacer (made of PPS resin) when the RFID tag is used.

When the spacer is replaced by another spacer in this manner, an adhesive tape or adhesive for adhering the spacer to other parts is also replaced by another adhesive tape or adhesive. That is, a heat-resistant adhesive tape or adhesive is replaced by a chemical-resistant adhesive tape or adhesive, or conversely, a chemical resistant adhesive tape or adhesive is replaced by a heat-resistant adhesive tape or adhesive. Further, a reflection plate with a heat-resistant coating is replaced by a reflection plate with a chemical-resistant coating, or conversely, a reflection plate with a chemical-resistant material coating is replaced by a reflection plate with a heat-resistant coating.

With the replacement of spacers or the like as described above, even if the actual operating environment of a prepared RFID tag is different from an operating environment which is assumed at the time of design, it is possible to customize the RFID tag in accordance with the actual operating environment.

In the above description, the reflection plates 120, 330 and 420 which are metal plates are described as examples of the reflection member according to this invention, but the present invention is not limited to these, and the reflection member may be metal foil or the like, for example.

In the above description, the reflection plates 120, 330 and 420 which are metal plates coated with heat-resistant material or chemical-resistant material are described as examples of the reflection member according to this invention, but the present invention is not limited to these, and the reflection member may be a non-coated metal plate which itself has resistance to some extent to heat or chemical.

In the above description, both the adhesion strength between the spacer and the covering body of the tag body and adhesion strength between the reflection plate and the spacer are set such that the two members can be peeled off from each other if a user applies a force to some extent, but the present invention is not limited to this, and the adhesion strength may be such a value that only the adhesion between the spacer and the covering body of the tag body can be peeled off, or such a value that only the adhesion between the reflection plate and the spacer can be peeled off. In the former case, when the spacer is replaced, the reflection plate is also replaced. In the latter case, the reflection plate is to be replaced, and, for example, in the case where heat environment or chemical environment assumed at the time of design is not so serious and the reflection plate of the RFID tag is simply a metal plate which is not coated with heat-resistant material or chemical-resistant material, but the actual heat environment or actual chemical environment is serious, a reflection plate of the RFID tag is replaced by another reflection plate which is coated with appropriate material.

In the above description, both the adhesive tape and adhesive are used for adhering the spacer and other parts with each other, but the present invention is not limited to this, and the spacer and other parts may be adhered to each other using only one of the adhesive tape and adhesive.

## Claims

1. An RFID tag comprising:
a tag member in which a communication antenna is wired on a predetermined base and a circuit chip which carries out radio communication through the antenna is electrically connected to the antenna,
a covering body which covers the tag member and encloses the tag member therein,
a reflection member which reflects radio communication radio wave and which extends along the base, and
a spacer sandwiched between the covering body and the reflection member.

2. The RFID tag according to claim 1, wherein the covering body has water-tightness.

3. The RFID tag according to claim 1 or claim 2, wherein the covering body is made of rubber or plastic.

4. The RFID tag according to anyone of claims 1 to 3, wherein the spacer is adhered to the covering body and the reflection member.

5. The RFID tag according to claim 4, wherein the spacer is removably adhered to at least one of the covering body and the reflection member.

6. The RFID tag according to anyone of claims 1 to 5, wherein the spacer is made of PPS resin.

7. The RFID tag according to anyone of claims 1 to 5, wherein the spacer is made of PEEK resin.

8. The RFID tag according to anyone of claims 1 to 5, wherein the spacer is made of fluororesin.

9. The RFID tag according to anyone of claims 1 to 5, wherein the spacer is made of ceramic material.

10. The RFID tag according to anyone of claims 1 to 9, wherein the reflection member has heat resistance.

11. The RFID tag according to anyone of claims 1 to 10, wherein the spacer is adhered to each of the covering body and the reflection member with a heat-resistant adhesive member.
